# EUROPEAN PATENT SPECIFICATION

(11) **EP 2 788 185 B1**
(45) Date of publication and mention of the grant of the patent: **29.04.2020**
(21) Application number: 12813521.7
(22) Date of filing: 06.12.2012
(51) Int. Cl.: B32B 27/08, B32B 27/10, B32B 27/12, B32B 27/32, A23B 4/027, A23L 3/3472, B65D 81/26, B65D 81/28

(54) **MATERIAL FOR PACKAGING FRESH FOOD OF ANIMAL ORIGIN INHIBITING THE DEVELOPMENT OF BIOGENIC AMINES**
MATERIAL ZUM EINPACKEN VON FRISCHEN NAHRUNGSMITTELN TIERISCHEN URSPRUNGS UNTER HEMMUNG DER ENTWICKLUNG VON BIOGENEN AMINEN
MATIÈRE POUR L'EMBALLAGE D'ALIMENTS FRAIS D'ORIGINE ANIMALE INHIBANT LE DÉVELOPPEMENT D'AMINES BIOGÈNES

(30) Priority: 09.12.2011 IT RM20110656
(43) Date of publication of application: 15.10.2014
(73) Proprietor: ESSEOQUATTRO S.P.A., 35010 Carmignano di Brenta (Padova) (IT)
(72) Inventor: ORTOLANI, Roberta, I-35010 Carmignano Di Brenta (PD) (IT); SAGRATINI, Gianni, I-35010 Carmignano Di Brenta (PD) (IT); SIROCCHI, Veronica, I-35010 Carmignano Di Brenta (PD) (IT); VITTORI, Sauro, I-35010 Carmignano Di Brenta (PD) (IT)
(74) Representative: Ghirardi, Valeria
(86) International application number: PCT/IB2012/057011
(87) International publication number: WO 2013/084175

(56) References cited:
- EP-A1- 1 834 761
- WO-A1-99/20258
- WO-A1-2008/017580
- WO-A2-2011/003565
- US-A1- 2002 106 466
- US-A1- 2006 110 080
- US-A1- 2008 175 965
- US-B1- 6 196 960
- US-B1- 6 482 452
- "Aroma-Frisch - das Frischhaltepapier", Papier-Kruse , 17 January 2009 (2009-01-17), Retrieved from the Internet: URL:https://web.archive.org/web/2009031004 5426/http://papier-kruse.de/aromafrisch.ph p [retrieved on 2017-03-23]
- "DIN EN 13432 Verpackung - Anforderungen an die Verwertung von Verpackungen durch Kompostierung und biologischen Abbau - Prüfschema und Bewertungskriterien für die Einstufung von Verpackungen", DEUTSCHE NORMEN. DIN N,, vol. DIN EN 13432, 1 December 2000 (2000-12-01), pages 1-18, XP009148650,
- "ASTM D 6400, Determining Aerobic Biodegradation of Plastic Materials Under Controlled Composting Conditions", , 1 February 2002 (2002-02-01), pages 1-3, Retrieved from the Internet: URL:http://worldcentric.org/files/TPLA-Ute nsils-ASTM6400 [retrieved on 2018-02-22]

## Description

### Object of the invention

The present invention refers to a packaging for fresh foods, in particular for meat and fish. Such a system has the prerogative of inhibiting the development of biogenic amines and of prolonging the characteristics of freshness of foods, preservability and maintaining organoleptic characteristics.

### Background of the invention

### Fresh foods of animal origin: meat and fish

Meat and fish are among the basic foods of the human diet and have high nutritional value, particularly as a primary source of protein of animal origin. In the so-called Mediterranean diet, fish represents an important nutritional element.

As well as representing one of the main sources of protein and essential amino acids, meat is also rich in vitamins of group B, in haemic iron and in various minerals. If on the one hand the nutritional characteristics of meat are known and excellent (the proteins contained have a high biological value), on the other hand it should be said that its preservation and therefore maintaining its main nutritional constituents requires particular care and carefully controlled conditions. The high content of water (50-79%) and protein (15-23%) of fresh meat makes this food an ideal environment for the development of microorganisms, particularly in the case in which the conditions firstly of slaughter and then of preservation determine a high level of contamination. It can thus be said that meat possesses a useful life (term known in the field of food technology also as "shelf-life"), in terms of fairly short preservability, and it needs to be kept at low temperatures to contain the metabolic reactions of the tissues and the development and proliferation of microorganisms, said development almost always being accompanied by the production of secondary substances that lower the quality of the product itself. This short shelf-life can cause a series of problems and drawbacks deriving from the transportation and distribution of the product, if they are not carried out in optimal conditions.

From the nutritional point of view, fish is an excellent nourishment due to its easy digestion, its substantial content of proteins with high biological value, of minerals and vitamins and the particular composition of the lipid fraction. It is known for its high phosphorus content, but particularly for the unusual abundance of polyunsaturated fatty acids of omega-3 series, in particular of eicosapentaenoic acid or EPA, precursor of series 3 prostaglandins, and of docosahexaenoic acid or DHA. Also in this case, given the substantial nutritional importance of this nourishment and its easy perishability, specific conditions of preservation are necessary (low temperatures) and above all constant conditions during transportation, storage and sale, to slow down microbe proliferation and the metabolism of tissues. Fish, like meat and even more so, is a food with a "shelf-life" that is especially short if consumed fresh and hence it is of extreme commercial interest to be able to increase the useful life while keeping its excellent nutritional characteristics unchanged.

### Biogenic amines

Biogenic amines are basic nitrate compounds present in living organisms, thus, in foods (C. Ruiz-Capillas, F. Jimenez-Colmenero: Biogenic Amines in Meat and Meat Products; Critical Reviews in Food Science and Nutrition, 44, 489-499 (2004)).

Based on their chemical structure, they are classified into three categories: aromatic amines (histamine, tyramine, β-phenylethylamine, tryptamine), aliphatic diamines (putrescine and cadaverine), aliphatic polyamines (spermine, spermidine, agmatine) (T.A. Smith, Amines in Food, Food Chem., 6, 169-200, 1980; C. Ruiz-Capillas, F. Jimenez-Colmenero: Biogenic Amines in Meat and Meat Products; Critical Reviews in Food Science and Nutrition, 44, 489-499 (2004)).

Biogenic amines are produced in protein-based foods both by decarboxylation of amino acids (action catalysed by the carboxylates present in some microorganisms) and through amination and transamination of aldehydes and ketones (J. Karovicova, Z. Kohaidova, Biogenic Amines in Food, Chem. Pap., 59(1) 70-79 (2005)) and through the normal cellular metabolism of the tissues constituting the food itself (S. Bardócz, Polyamines in food and their consequences for food quality and human health. Trends Food Sci Techn., 6, 341-346, 1995).

High concentrations of biogenic amines in food can constitute a risk for the consumption of the food itself, causing serious gastro-intestinal problems, pseudoallergic responses and strong migraines. In particular, high concentrations of histamine can have negative effects on the cardiovascular system, causing a lowering of blood pressure, skin irritations and allergic reactions, whereas large amounts of tyramine cause the release of noradrenaline by the sympathetic nervous system, causing blood pressure to raise and strong migraines. Spermine and spermidine were also associated with the development of food allergies. Based on their toxic effects closely linked to their concentration in the food, biogenic amines are considered a clear indicator of quality and freshness of foods, particularly those protein-based, like meat and fish, correlating their high concentration to a deterioration of the nutritional properties of the food itself.

As well as the aspects linked to food safety, it should also be emphasised that the presence of biogenic amines is closely linked to the organoleptic quality of the food in question; indeed, high concentrations of biogenic amines significantly change the aroma of the food, since they are the main cause of unpleasant smells that make the food less appealing to the consumer. Finally, it should also be said that the European Food Safety Authority (EFSA) takes great care over the aspect of biogenic amines in foods and recently (December 2010, see EFSA Journal 2011; 9(10):2393 concerning fermented food products) upon the request of the member States, it launched an invitation to researchers and experts in the field to present data on the levels of biogenic amines in foods and to evaluate the risks connected to such substances.

Based on the considerations outlined above, in order to lengthen the life of a fresh food (meat, fish) it becomes crucially important to contain the development of biogenic amines, so as to keep its freshness as long as possible and its nutritional properties intact. In order to do this, the market needs suitable and innovative packaging intended for the preservation of fresh and easily perishable foods like meat and fish.

### Active packaging

Food packaging came about for the purpose of preserving foods, transport them in a practical and safe manner from one place to another, and protect them from biological and chemical contamination. The modern concept of functional packaging is linked to packaging solutions in which it is provided the use of a material, a container or a packaging accessory capable of performing an active and additional function with respect to the conventional ones of containment and generic protection of the product.

The concept of functional packaging in practice is now in the form of active packaging. Active packaging can be made using products capable of modifying the concentration of different volatile compounds and gases present in the inner atmosphere between food and packaging through the use of oxygen absorbers, humidity absorbers and regulators, carbon dioxide absorbers, ethylene absorbers, ethanol emitters. Moreover, "active" packaging can be made by adding substances to the packaging that are released gradually over time and which increase the preservability of the food by exerting an action that can be antimicrobial, anti-oxidant or enzymatic. Antimicrobial agents added to packaging are for example nisin (antibiotic), chitosans, manganese, zinc and magnesium oxides, used to preserve fresh fruit. Synthesis antioxidants added to packaging containing cereals are, for example, butylhydroxytoluene (BHT) and butylated hydroxyanisole (BHA), whereas agents with enzyme activity used in packaging for dairy products are cholesterol reductase and glucose oxidase. Vegetables constitute an irreplaceable source of substances and mix of molecules that can exert a protective and preservative action for the food thanks to their anti-oxidant and antimicrobial properties. In particular, natural extracts and essential oils deriving from plants are rich in volatile molecules possessing these marked biological actions. Among the most common plants of which such properties have been shown in scientific studies, we must consider *Rosmarinus officinalis* (rosemary), *Origanum vulgare* (oregano), *Salvia officinalis* (salvia). The antimicrobial action is attributed to classes of compounds constituting the volatile fraction, like terpene hydrocarbons, oxygenated terpenes, aldehydes, ketones and esters, or to specific substances like carnosic acid, carnosol, rosmarinic acid (contained in rosemary) or to others like eugenol, carvacrol, thymol (contained in oregano).

It is known that the essential oils of aromatic plants are used in the fields of perfume and cosmetics. Incorporation of some of these oils, including rosemary, in complex mixtures for deodorants for human use has been disclosed (WO 2011/084463).

The state of the art gives numerous examples of use of substances of vegetable origin to prolong the preservation of fresh foods, in particular meat and fish. Apart from the traditional uses of aromatic spices, such as pepper and chilli pepper, with anti-bacterial activity, essential oils have proven to be effective as anti-oxidants and as antibacterials.

In the literature we can find numerous examples of methods for preserving foods.

As seen above, one of the main ways of prolonging the preservation and freshness of food is to control, or rather contain the proliferation of the microbial count, meant as directed against bacteria, fungi, moulds or other contaminating microorganisms. This purpose is pursued either by acting directly on the microorganism or on the factors promoting its proliferation.

One of the first examples is found in patent GB 1465533, which treats foods with a mixture of cinnamaldehyde, or also with cinnamon oil, mixed with compounds present in garlic, also in the form of garlic oil. The treatment proves particularly effective against fungi and moulds. This type of treatment with oils having pronounced organoleptic characteristics poses the problem that the food treated must preserve its own flavour and aroma, which must remain acceptable and recognisable to the consumer.

JP 60070053 discloses a mixture of a substance capable of absorbing oxygen, and generating carbon dioxide, with a substance capable of generating alcohol (ethanol). Ascorbic acid and a ferrous salt are mentioned. The mixture is closed in the packaging together with the food and develops an anti-bacterial action.

WO 95/04481 discloses the use of a phosphatase inhibitor derived from a plant and of a 5'-ribonucleside, directly in the food or in the form of a condiment, to prevent the deterioration of the flavour and prolong it.

There are numerous examples of use of essential oils from aromatic plants, known for their anti-oxidant and antimicrobial activity, in the preservation of foods.

GB 2357967 discloses products for oral hygiene for human use, or food for pets containing one or more essential oils of citronella (*lemongrass*)*,* lavender and rosewood for selectively inhibiting anaerobic bacteria of the oral cavity.

WO 03/009694 uses essential oils from a series of plants in association with chitosan for inhibiting pathogenic bacteria for man and treats agricultural products after harvesting. Packagings impregnated with the association are also disclosed.

KR 20030015512 discloses a mixture for the preservation of harvested products. Rosemary oil is mentioned as a secondary component in a complex mixture, whose the main active ingredients are stabilized mustard and/or horseradish extracts for the preservation of fruit and vegetable products. The mixture is incorporated in a packaging.

Mixtures of various essential oils extracted from plants are disclosed in WO 2004/076680 for their use as inhibitors of bacteria development by incorporating the mixtures in various products, including cosmetics and foods. The plants from which the oils are extracted are *Origanum vulgare L., Thymus vulgari L., Cynnamomum zeylanicum Nees, Rosmarinus officinalis L., Lavandula officinalis L., Hydrastis Canadensis L.,* and olive leaf extract.

The anti-oxidant activity of different plant extracts is described in EP 1477619 as well as their use in varnishes for food supports. Once the varnish has been applied to the support, or packaging, the active substances volatilize and come into contact with the food.

EP 1657181 B1 refers to an anti-microbial packaging formulated with natural extracts and intended for the preservation of foods. This document discloses an active liquid formula comprising a base resin, such as nitrocellulose, acrylic, vinyl, which is selected according to the type of packaging on which it is applied. A solvent is used to give the necessary fluidity to the active liquid and other additives are used to give flexibility or other characteristics to the coating. The natural extracts are based on essential oils that contain the active agents, with suitable fixers to immobilize them on the packaging and ensure their controlled release. Examples of extracts are cinnamon, ginger, clove, rosemary, oregano, dill, basil. The description is rather generic and the foods for which the composition is intended are not specified. The tests of anti-microbial action are carried out *in vitro* on selected bacterial strains and not on the food as such, and in this way it cannot be deduced that the anti-bacterial action takes place in a more complex and less controlled environment such as a fresh food kept in the normal state of preservation in the home. The incorporation in the packaging of the formulation containing the anti-bacterial active agents is exemplified with impregnation, coating and spraying. No particular limitation is given to the type of packaging on which to apply the anti-bacterial action formula. Moreover, in this reference there is no the slightest mention of biogenic amines, but the problem is exclusively bacterial contamination. The same inventors then improved this type of packaging incorporating the essential oils in paraffin, as disclosed in EP 2025620. The anti-microbial activity is shown in strawberries.

US 2006/01100080 discloses a hermetic packaging with a particular configuration of closures and containing an agent for prolonging freshness. In the long list of such agents, the essential oils of aromatic plants are also mentioned, but without any evidence of particular characteristics.

US 2008/0220036 also discloses packaging for foods of plastic material with essential oils of herbs incorporated. This reference confirms the anti-bacterial activity of the oils, in particular in a few of their components, for example thymol. However, also in this reference the tests of anti-bacterial activity are carried out in controlled laboratory conditions and on *in vitro* cultures. A variant of this packaging is disclosed in GB 2449876, where the essential oils with anti-bacterial activity are incorporated in a microporous material.

GB 2460468 proposes a mixture of orange oil and bergamot vapours with pronounced anti-microbial properties that, advantageously, does not alter the flavour of the food. The inhibition tests were carried out extensively *in vitro* and also shown on samples of salad and cucumber exposed to the vapours.

CN 101803629 discloses a complex preservation system for cured ham, where rosemary oil is sprayed on the food, coated with a chitosan solution and packed in a packaging containing anti-oxidants based on iron and persulfate.

US 2010/0303977 uses rosemary extract to protect meat and fish from the oxidising attack and the rancidification of the fatty parts in foods. The extract is applied directly on the food. There is no mention of amines.

US 2008/175965 discloses a food preservation composition comprising an absorbent material and an antimicrobial agent, such as rosemary, sage, thyme, wasabi or an extract thereof, and several other agents of vegetal origin.

US 2002/106466 relates to a package for packaging fish or other perishable food items, said package comprising a multilayer polymer film having at least an adsorbent layer comprising at least one polymer that removes volatile odoriferous compounds, such as amines generated during storage of the food from inside of the package.

US 6482452 discloses a combination of a liquid-tight meat tray and an adsorbent/separating layer inserted into the meat tray. A foil is wrapped all around the tray, said foil comprising a zone containing a purely plant-based preservative having microbially active volatile components.

US 6196960 discloses a method for providing a package having a coated inner surface comprising an additive such as essential oils, flavorants, fragrances, colorants, antimicrobial agents.

WO 2011/003565 discloses a packaging material for food comprising a paper layer, a polyethylene layer, a metal layer and an adhesive layer.

Recalling what stated above for biogenic amines, in the field of food technology it is recognised that controlling the bacterial load in foods is not entirely sufficient to ensure the quality of the product. This problem is particularly relevant for fresh products quickly perishable, especially meat and fish, which are greatly affected also by environmental and climatic conditions.

We have seen above that biogenic amines are an important indicator of quality and controlling their level regulates the hygiene of foods.

A report on biogenic amines in meat and derived products is found in C. Ruiz-Capillas, F. Jimenez-Colmenero: Biogenic Amines in Meat and Meat Products; Critical Reviews in Food Science and Nutrition, 44, 489-499 (2004), cited above. In this work, the amount of biogenic amines, i.e. the amines that derive from the decarboxylation of free amino acids, is due to the presence of bacteria equipped with decarboxylases amino acid enzymes. The presence of biogenic amines is adopted as an indicator of the quality of meat and of derived products. However, it is not an entirely reliable indicator, since not all contaminating microorganisms are equipped with these enzymes and not all enzymes have the same decarboxylation capability, and therefore a low amount of biogenic amines does not necessarily correspond to a low degree of bacterial contamination. Biogenic amines also form during normal cell metabolism, but in smaller amounts with respect to those deriving from a bacterial contamination. This work discusses in detail the genesis of biogenic amines in the various types of meats and derived products, but a superficial mention is made of the methods for controlling and suppressing them, quoting cold and packaging in CO₂ atmosphere as preservation methods.

J. Karovicova and Z. Kohajdova in Biogenic Amines in Food, Chem. Pap. 59(1) 70-79 (2005), discuss in detail the problem of biogenic amines in foods, highlighting, and at the same time confirming, how dangerous they are in foods, especially histamine, and the risk factor that they represent for certain particularly sensitive subjects. Biogenic amines, as already stated, originate from the activity of bacteria decarboxylases amino acid, but also from the metabolic activity of cells. Practically all foods can develop biogenic amines, but particular attention is given to fresh foods, especially meat and fish (see also P. Kordiovska, and al., Czech J. Anim. Sci., 51, 2006, (6): 262-270). This work provides a lot of information on the toxicology of biogenic amines and continually emphasises the importance of determining them as an indicator of quality, freshness and good preservation of the food. Many analytical methods are quoted in this work, but no method for reducing or eliminating biogenic amines is quoted. As regards analytical methodology, see also H.K. Mayer and al., Journal of Chromatography A, 1217 (2010) 3251-3257 and CN 101793881.

In the literature (see the aforementioned works of Ruiz-Capillas, Karovicova and Kordiovska and coll.) it is described how for some foods subjected to fermentation (cheeses, charcuterie and wines) the presence of biogenic amines is natural and even characterises the flavour, so that, within certain limits, such amines are not necessarily an indicator of poor quality of the product; conversely, the presence of biogenic amines in fresh foods, especially meat and even more so fish, is an indicator not only of possible bacterial contamination, but also of poor freshness of the food.

Some methods are known for reducing or controlling the level of biogenic amines in food products.

Italian patent IT 1122949 discloses a method for preparing a food with low amine content, for example a wine, a beer, a cheese, using a microorganism in the processing of the food that causes the transamination or deamination of histidine. This patent, as well as controlling the content of histamine only, ignoring the other biogenic amines, uses microorganisms that must have no pathogenic action and that must ensure constant activity for industrial uses.

WO 0216221 specifically discloses the problem of biogenic amines in the preservation of fresh fish. In this reference, the production of amines is exclusively attributed to bacterial contamination and the proposed solution consists of a packaging film comprising a copolymer of ethylene with a α,β-unsaturated acid having from 3 to 8 carbon atoms and possibly in association with zeolites, another amine absorber. This film acts as an amine absorber, but has no effect on their production. In this way, fish undergoes its natural ageing, but the organoleptic effect of the amines is reduced or cancelled out. The association between the polymer and the zeolite ensures that the absorption of the amines does not exceed the safety production level of amines, beyond which the food is no longer acceptable for food consumption.

KR 20100074849 discloses a system for suppressing the production of biogenic amines in fish (mackerel), which shows the action of some natural extracts that come from *Rhus Chinensis*, from *Crataegus pinnatifida* and from lemon. Such extracts are sprayed directly onto the fish and are not fixed on a special food packaging, thus constituting a limit to application, having to process the food before packaging.

The examples of patent literature on active packaging are very numerous and cannot all be given here in their entirety.

An active packaging useful for the purposes of the present invention must make it possible to create a modified atmosphere and keep it inside the packaging. Alternatively, or additionally, the packaging must be able to release substances in contact with the food.

Vacuum packaging is another technology commonly used in the packaging and preservation of foods.

With this type of treatment, air is eliminated and most of the aerobic microorganisms do not develop. Consequently, food lasts longer. This technique is applied to cooked and raw foods and can be combined with refrigeration.

Modified atmospheres represent another packaging system for foods in which the percentages of gases that make up the atmosphere are suitably dosed. The packaging material must be impermeable to oxygen and humidity. However, such packaging techniques also do not ensure against the possible development of microorganisms. For this reason, for example, vacuum packaging may be followed by a sterilization treatment, which however is not suitable for all foods.

Anyway, vacuum technology does not solve the problem of biogenic amines, given that it does not stop or slow down the cellular metabolism of fresh food of animal origin. For example, EP 0300286 discloses a polymeric multi-layer for packaging foods, in particular sweets and coffee, which is able to hold the flavours and aromas appreciated by consumers inside the packaging.

In light of what has been stated above, the problem of the preservation of foods, in particular fresh foods and especially meat and fish, naturally concerns controlling and reducing the bacteria count, which, due to the characteristics of production, consumption and distribution to the end user, be it for the home or for the food and beverage and catering, is virtually impossible to eliminate. However, a control preventing the proliferation of the bacteria load, although essential in food hygiene, is not the only parameter for ensuring the quality of fresh food, for which ensuring an intrinsic freshness is also wished, i.e. a control of the cellular metabolism that constitutes the tissue of the food itself.

Biogenic amine are an important and recognised indicator of the quality of meat and fish and the problem of effectively controlling and/or reducing them still exists.

Moreover, this control and/or reduction must not use methods and substances (for example plasticizers or processing aids) that alter the organoleptic characteristics of the fresh food, which must still remain acceptable to the tastes of the consumer. This problem, although felt in the field, has not really been solved, as can be seen in patent EP 1657181, wherein the antimicrobial active liquid for coating the packaging is produced using solvents and process additives, such as flexibilizing agent and others. Moreover, some of the essential oils used can have flavours which do not match with the food with which they come into contact.

The purpose of this invention is to solve the aforementioned problems, through a packaging and packaging material intended for the preservation of meat and fish capable of inhibiting the development of biogenic amines over time, thus ensuring a better preservation of the freshness and of the nutritional properties of the food itself.

### Summary of the invention

It has now surprisingly been found that the extract, or the essential oil of *Rosmarinus officinalis,* of *Citrus limon* and *Vitis vinifera* or their mixtures, when incorporated in a material suitable for the packaging of fresh foods, in particular meat and fish, perform an inhibiting and controlling activity of biogenic amines.

Therefore, it is an object of the present invention a material for packaging food (10) comprising a first layer (11) made of paper, which is coupled to a second layer (12) made of polyethylene or from biodegradable and compostable plastic material, an optional third metallic layer (13) deposited on said second layer (12), said second layer (12) is coupled to said first layer (11) by interposition of an adhesive layer (14), or by interposition between said third metallic layer (13) and said first layer of paper (11), characterised in that on said second layer (12) on the surface (24) facing towards or in contact with the food a natural extract or an essential oil or at least one active molecule isolated from said natural extract or said essential oil from Rosmarinus officinalis or Citrus limon or Vitis vinifera or mixtures thereof is present.

Another object of the present invention is a process for producing said material, wherein onto the surface facing towards, or in contact with, the food a natural extract or an essential oil or at least one active molecule isolated from said essential oil coming from *Rosmarinus officinalis* or *Citrus limon* or *Vitis vinifera* or mixtures thereof is applied.

Another object of the present invention is the use of said material for packaging a fresh food of animal origin.

Yet another object of the present invention is a method for inhibiting the development of biogenic amines in a fresh food comprising the packaging of said food in a said material.

With the present invention it is possible to prolong the preservation of fresh food, keeping the organoleptic characteristics.

For the purposes of the present invention, the terms "package" and "packaging" should be taken as synonyms.

The present invention will now be disclosed in detail also by means of figures and examples.

In the figures:
Figure 1 shows a preferred embodiment of the invention, where the packaging is the sheet disclosed in patent EP 1584464.
Figure 2 shows the development of total biogenic amines in veal preserved in "non active" and "active" packaging 1% for comparison
Figure 3 shows the development of total biogenic amines in fish preserved in "non active" and "active" packaging 4% for comparison

### Detailed description of the invention

For the purposes of the present invention, the terms "natural extract", "essential oil" and "active molecule" are also generically indicated as "active ingredient".

For the purposes of the present invention, the part of the plant used to obtain the extract or the essential oil or the molecule contained in it is preferably the part richest in active ingredients that inhibit the development of biogenic amines. In the case of *Rosmarinus officinalis* they are the leaves, preferably free from the woody parts; in the case of *Citrus limon* it is the rind, preferably free from pulp; and in the case of *Vitis vinifera* they are the marc, in particular the seeds (grapeseed). In preferred embodiments, for *Rosmarinus officinalis* it is an essential oil, in the case of *Citrus limon* it is a natural extract (hydroalcoholic) and in the case of *Vitis vinifera* the extraction is carried out using a hydroalcoholic solution, preferably under magnetic agitation.

According to the present invention, the essential oil or the natural extract is preferably obtained through hydrodistillation of the plant or of the fruit using water. When used, the hydrodistillation technique is preferred since it avoids the use of organic solvents and the subsequent elimination of their traces. Indeed, the extract and the essential oil, coming into contact with foods, must comply with the relevant packaging rules. The distillate is then diluted with ethyl alcohol, for example of food grade (at 90-95%). The dilution ratio can vary without particular limitations within a wide range, compatibly with the nature of the starting material, the extraction conditions and the desired end product. Purely as an example the range can vary from 1/99 to 50/50; but other ratios are also possible. A preferred example of essential oil/alcohol ratio is 30/70, but other essential oil/alcohol ratios like 20/80, 40/60, 50/50 can also be adopted. At this point, without the use of any fixing resin, the oil is distributed over the inner part of the packaging coming into direct contact with the food. For better effectiveness, the oil is distributed uniformly on the surface of the packaging. Advantageously, it is possible to use the spraying technique of or a rotogravure group or a flexo equipped with a doctor blade or spreading head. If wished, the ethyl alcohol is removed with suitable means, for example with a stream of hot air or a heating surface, or simply left to evaporate. The conditions of removal of the solvent and the means for carrying it out are within the capabilities of the man skilled in the art and do not need particular details.

In the embodiment of the present invention with marc, hydroalcoholic extract is used. In this embodiment it is preferred to use grapeseed (seeds).

The oil or extract remain spread over the surface of the packaging.

Another embodiment of the present invention foresees the incorporation of molecules contained in the volatile fraction of the essential oils of *Rosmarinus officinalis,* of *Citrus limon* or of *Vitis vinifera,* in particular from the marc, more particularly from the grapeseed. Among these molecules we mention terpene hydrocarbons, oxygenated terpenes, aldehydes, ketones and esters, or specific substances like carnosic acid, carnosol, rosmarinic acid (contained in rosemary). In the case of *Vitis vinifera* reference is made mainly to polyphenols.

In a preferred embodiment of the present invention, the concentrations of active ingredient are comprised in the range 0.1-4% w/w. The choice of the most suitable concentration is a function both of the inhibiting action against the development of biogenic amines, and of the aroma released by the essential oil and/or natural extract that must match well with the aroma of the food itself.

Advantageously, the present invention reduces the development of biogenic amines in fresh foods during their normal state of preservation from the shop to the end consumer. It should be noted that histamine is inhibited, whose adverse effects are well known.

The packaging according to the present invention can take any known form, from a sheet of paper to wrap the fresh product at the shop, for example the butcher's shop, delicatessen or fish shop, to the more complex packaging, where the layer of packaging material facing towards or in contact with the food contributes with the other elements of the packaging to create a controlled atmosphere, separate and isolated from the outside atmosphere, where the volatile substances active in the inhibition or control of biogenic amines are released by the packaging and come into contact with the food, also being able to be absorbed by it.

For the purposes of the present invention, the material of the packaging on whose surface facing towards or in contact with the food there is an agent for inhibiting and controlling biogenic amines can be made by polyethylene in its different forms (high, medium and low density).

In an embodiment of the present invention, the first layer of paper (11) is of the type known as "poly-coated paper". Such paper is coated through extrusion or co-extrusion with a flat head, as disclosed in US 3,480,464. The term "polythenated" is used here in the indicative and not limiting sense, since the man skilled in the art can choose to obtain such a type of paper also using other plastic films known in food technology. According to this embodiment, the present invention is carried out by depositing the agent for inhibiting and controlling biogenic amines on the surface of the plastic film facing towards or in contact with the food.

In an embodiment alternative to the previous one, paper, previously metallized, for example with aluminium, can be coated through extrusion with a plastic film.

In a preferred embodiment, the packaging is made by a layer of cellulose glued to the metallized side of a high density polyethylene (HDPE) film, where the essential oil or the natural extract is sprayed on the side of the film in contact with or facing towards the food.

In an alternative embodiment of the present invention, the packaging can consist of a single layer of material based on polyolefin resins, preferably high density polyethylene (HDPE) added with various natural or synthetic mineral fillers, and optionally with pigments in a totally conventional and known manner. Examples of such fillers are calcium carbonate, talc, titanium dioxide. According to the present invention on the side in contact with or facing towards the food one or more agents are deposited for inhibiting and controlling biogenic amines, in particular the extract, or the essential oil or one or more active molecules of *Rosmarinus officinalis* or *Citrus limon* or of *Vitis vinifera,* or mixtures thereof.

In a particularly preferred embodiment, the packaging in which the essential oils or the extracts of *Rosmarinus officinalis* and/or of *Citrus limon*, or of marc or mixtures thereof are incorporated is the one disclosed in EP 1584464. The packaging disclosed in this patent is known with the trademark Ideabrill®.

In another embodiment, the packaging is the one disclosed in WO 2010/069888 and it is known by the trademark Biobrill®. According to this embodiment, the material facing towards or in contact with the food, and on which there is the aforementioned agent for inhibiting and controlling biogenic amines, is formed by a layer of biodegradable and compostable plastic material of the type known on the market and admitted for use in food packaging. A preferred example of this type of material is a mixture made by a biodegradable and compostable polymer based on a copolyester of petrochemical origin and on a polymer based on polylactic acid of vegetable origin. Known examples are the products sold by BASF with the trademarks Ecoflex® and Ecovio®.

For the purposes of the present invention the term "biodegradable and compostable plastic material" designates a material that meets EN13432, ASTM6400, GreenPla (Japan) standards, and other analogous standards.

A further embodiment of the present invention provides a sheet of paper coupled as disclosed in EP 1584464, the surface of which in contact with the food supports the active ingredient according to the invention and a bag of the same material, but without active ingredient, in which the sheet wrapping the food is inserted, and the bag is then sealed.

The packaging produced are intended for packaging fresh foods bought over the counter like for example meat and fish.

In a preferred embodiment of the invention, the packaging is in the form of a sheet of paper in use in butcher's shops and in fish shops.

In a particularly preferred embodiment of the present invention, the food is wrapped with the packaging of the present invention, closed or rolled on itself and then positioned inside a bag of the type known as "freshness-saver" that is then sealed, for example with a gluing or thermo-welded tab. Preferably, this "freshness-saver" bag is made by the same materials that make up the packaging of the preferred embodiment of the present invention, i.e. as disclosed in EP 1584464, but without active ingredient. The sealed closure allows the creation of an atmosphere inside the packaging, in which the essential oils and/or natural extracts, including volatile molecules, act both by direct contact with the food itself and by diffusion into the inner atmosphere of the packaging. In this way, the bioactive molecules contained in the active ingredient are able to act by inhibiting the development of biogenic amines.

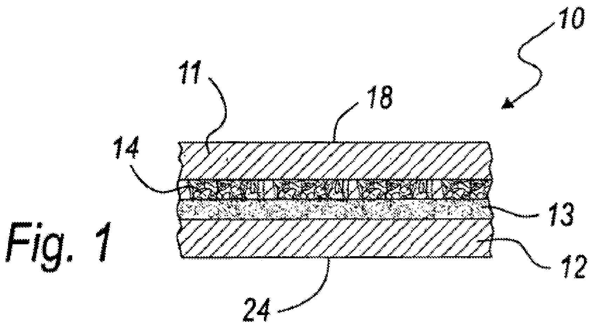

According to this preferred embodiment, and with reference to Figure 1, the food packaging (10) comprising a first layer (11) made of paper, which is coupled to a second layer (12) made of polyethylene or of biodegradable and compostable plastic material, an optional third metallic layer (13) deposited on said second layer (12), said second layer (12) is coupled to said first layer (11) by interposition of an adhesive layer (14), or by interposition between said third metallic layer (13) and said first layer of paper (11), characterised in that on said second layer (12) on the surface (24) facing towards or in contact with the food there is a natural extract or an essential oil or at least one active molecule isolated from said natural extract or said essential oil from *Rosmarinus officinalis* or *Citrus limon* or *Vitis vinifera* or mixtures thereof. It should be understood that in the absence of the third metallic layer (13), said layer of adhesive (14) is interposed between said first layer of paper (11) and said second layer of polyethylene (12).

According to this patent, and as illustrated in Figure 1, a sheet for the food packaging is generically indicated with reference numeral (10).

The sheet (10) comprises a first layer (11) made of paper, which is coupled to a second layer (12) made of polyethylene.

The second layer (12) is treated according to the present invention to incorporate, in a supported manner, the extracts or the essential oils, or the active substances of *Rosmarinus officinalis* or of *Citrus limon* or of marc or mixtures thereof.

When present, said third metallic layer (13) is deposited on the second layer (12).

Aluminium is a preferred example of material for said metallic layer (13).

In a particularly advantageous embodiment of the present invention, in order to protect the freshness of the food it is sufficient to have a coverage of aluminium vapours of less than 18 nm equal to 0.05 gr/m². (a much smaller amount with respect to what is taught in other patents). This offers an advantage from the environmental point of view for the disposal of the packaging.

The second layer (12) is coupled to the first layer (11) on the side of the third metallic layer (13) by interposition of a fourth adhesive layer (14) between the third metallic layer (13) and the first layer of paper (11).

The first layer (11) is formed by paper material for food use, or recycled paper or pure cellulose. The grammage is the conventional one, for example between 15 and 88 g/m². Paper of the Kraft type, also recycled, is a preferred example.

The side (18) of the layer of paper (11) can optionally be intended for printing.

The second layer (12) is made of polyethylene. The polyethylene can be high, medium or low density and is selected according to the desired characteristics, for example low density or rigidity or permeability, according to criteria well known in the field.

In an alternative embodiment, the second layer (12) is made of biodegradable and compostable plastic material of the type known on the market and allowed for use in food packaging. A preferred example of such a type of material is a mixture made by a biodegradable and compostable polymer based on a copolyester of petrochemical origin and a polymer based on polylactic acid of vegetable origin. Known examples are the products sold by BASF with the trademarks Ecoflex® and Ecovio®. In a preferred embodiment, this layer (12) has a density equal to about 1.25 ± 1 g/cm³. In another preferred embodiment, this layer (12) has a minimum thickness of about 8 µ with a grammage of about 10 g/m². The maximum thickness is determined as a function of the requirements and the characteristics of the product.

Preferably, the third metallic layer (13) is made of aluminium. Aluminium is used according to its known characteristics in food packaging, like reflecting light and infrared and ultraviolet radiation, thus facilitating or protecting the freshness of the food contained in the packaging.

As stated above, the adhesive layer (14) is arranged between the metallic layer (13) and the layer of paper (11).

For the purposes of the present invention, the adhesive layer (14) does not necessarily have to be a continuous layer covering the entire surface of the metallic layer (13) and the layer of paper (11), but it can be present also in various forms, for example dot deposited. The important thing is that the amount of adhesive deposited is sufficient to keep the coupling between the layer (11) and the layer (13) in normal conditions of use.

In a particularly preferred embodiment of the invention, said fourth adhesive layer (14) allows the separation of said second layer (12) from said first layer (11). For this embodiment, adhesives of the known type can be used which allow the adhesion of the layers in normal conditions of use and handling of the packaging, but which allow the separation of the layer (12), which also comprises the possible metallized layer (13), from said layer of paper (11) with a simple manual operation. There is no limit to the type of adhesive that can be used, with the sole condition that it is compatible with a food packaging.

Since the metallic layer (13) is intimately connected with the layer of plastic (12), indeed the latter is metallized with the material of the layer (13), the use of an adhesive in the layer (14) allowing the separation of the layers makes it possible to separate the layer of paper (11) from the layer of plastic (12) that keeps the metallic layer (13). In this way it is possible to dispose of the layer (11) and the layer (12) separately, according to the use of sorted waste collection.

In a preferred form of this embodiment, advantageously, the metallic layer, in particular made of aluminium, is deposited in an amount of about 0.032 g/m². This amount is compatible with the disposal of the layer (12) in sorted waste collection.

The fourth adhesive layer is advantageously made of vegetable amides and glucose. Other types of adhesives allowing the separation of the layer (11) from the layer (12) are known in the field and the man skilled in the art is able to select them by using his general knowledge.

In another form of preferred embodiment of the present invention, the sheet just disclosed above, and disclosed further in patent EP 1584464, is inserted in a closable bag, preferably in a sealed manner, for example by thermo-welding.

In an even more preferred embodiment of the present invention, said bag is made by the same material as the sheet with the condition that said second layer (12) referred to the bag does not support said active ingredient.

The selection of materials, paper, polymers, metals and adhesive layers is made according to the intended use of the packaging. The packaging of the present invention is intended for packaging and preserving foods, in particular fresh foods, more specifically meat and fish, and therefore the selection of the materials must be in accordance with the applicable regulations.

For every particular characteristic of this preferred embodiment of the invention, and known on the market with the trademark Ideabrill ®, reference is made to the content of EP 158446.

In another form of preferred embodiment of the present invention, said packaging takes the form of a vacuum packaging. Advantageously, said agent for inhibiting biogenic amines will have a longer residence time in the packaging and/or in contact with the food with respect to a normal packaging.

In yet another form of preferred embodiment of the present invention, said packaging takes the form of a packaging in modified atmosphere. Advantageously, said agent for inhibiting biogenic amines will have a longer residence time in the packaging and/or in contact with the food with respect to a normal packaging.

As stated, the packaging according to the present invention can take any form suitable for the packaging of a food, be it in loose form, in which case the packaging could advantageously be, for example, in the form of a sheet, bag, tray, be it in pre-dosed form, in which case the packaging can advantageously be, for example, in the form of a packet. In this latter case, different embodiments can be provided. For example, the packaging of the present invention can be a bag, with the surface on which said agent is deposited for inhibiting biogenic amines again facing towards or in contact with the food, sealed and contained in a packaging, even multiple. Said bag can be under vacuum or in modified atmosphere. In another example, the packaging of the present invention can be a sheet, deposited on the bottom of a tray, with the side carrying said agent facing upwards and on which the food, for example meat or fish, is placed. The tray is thus packed and sealed with conventional methods, for example in modified atmosphere. Said sheet can be for example as disclosed in the aforementioned EP1584464 or WO2010069888, or in a simpler form thereof, for example without the metallization layer. In an even simpler form, said sheet can also be just polymer for food use, on the condition that said polymer is compatible with said agent, as explained above.

In order to evaluate the amount of biogenic amines in the foods analysed (fresh meat and fish), an analytic method was used that provides the use of the solid phase extraction technique (SPE) and for the instrumental part of high performance liquid chromatography (HPLC) developed by the present inventors (G. Sagratini, M. Fernández-Franzón, F. De Berardinis, G. Font, S. Vittori, J. Mañes, Simultaneous determination of eight underivatized biogenic amines in fish by solid phase extraction and liquid chromatography-tandem mass spectrometry, Food Chemistry, 2011, doi: 10.1016/j.foodchem.2011.10.054). As detection systems coupled with the HPLC a photodiode detector (DAD) was used alternatively to a fluorescence detector (FD) alternatively to a single quadrupole (MS) or a triple quadrupole (MS/MS) mass analyser. It should be specified that the first two systems analyse biogenic amines in derivatized form whereas the techniques referring to mass spectrometry (MS and MS/MS) allow the analysis thereof also in non derivatized form.

The sample of food, meat or fish is treated according to well-known methods for extraction and determination of biogenic amines. These methods are within the general knowledge of the man skilled in the art (see also the literature quoted in the present application) and do not need particular descriptions in the present invention.

Hereafter we provide the exemplary description of a method, being it understood that other methods can be used to confirm the result obtained by the present invention.

Specifically, a suitably sampled amount of matrix is extracted with a suitable volume of 5% trichloroacetic acid (TCA) or other suitable means through homogenisation for a suitable time (about 3 minutes), the heterogeneous mixture is then centrifuged (for example for 10 min at 5000 rpm) and the supernatant put aside. A second extraction is carried out with 5% TCA, centrifuged and the supernatants are recombined. At this point, if the amines are analysed in HPLC-DAD or HPLC-FD a derivatization reaction is necessary, otherwise see below. Then, an aliquot of acid solution it taken, placed in a test tube shielded from light and the known derivatization reaction with Dansyl chloride (NaHCO₃, NaOH 2M and Dansyl chloride (10 mg/ml in acetone)) is carried out. The mixture is placed under magnetic stirring for a suitable time and at a suitable temperature. At the end of the derivatization, the excess dansyl is neutralised with a base (for example 28% NH₄OH), then the residual acetone is evaporated under a weak flow of inert gas (for example nitrogen). At this point, the residue is subjected to purification on reverse phase cartridges SPE C₁₈, which, positioned on the vacuum station, are activated with acetonitrile and then conditioned with water. The derivatized extract is then loaded onto the cartridge, the eluate is discarded and the cartridge is washed with water. Then, after having dried the cartridge perfectly, it is eluted with acetonitrile. The purified extract obtained is now filtered on filters of 0.45 µm and injected in HPLC. The HPLC analysis is carried out using a C18 reverse phase column, a mobile phase consisting of methanol/acetonitrile (7/3) and water using a chromatographic gradient. The monitored amines are: tryptamine, phenylethylamine, putrescine, cadaverine, tyramine, histamine, spermine, spermidine. The monitoring wavelength λ is 254 nm.

When a mass spectrometer with single or triple quadrupole detector is used, the biogenic amines do not need to be derivatized. Then an aliquot of the supernatant previously obtained is basified at pH 11 (for example with 28% NH₄OH) and loaded on a previously activated and conditioned SPE STRATA X cartridge. The cartridge is washed with a water/methanol mixture. Then, after having dried the cartridge perfectly, it is eluted with a methanol/acetic acid mixture. The obtained purified extract is evaporated under a nitrogen flow, mixed with 0.1N HCI, filtered on 0.45 µm filters and injected in HPLC-MS or HPLC-MS/MS. The HPLC analysis is carried out using an reverse phase column Sinergy Hydro, a mobile phase consisting of methanol and ammonium formate buffer (HCOOH/HCOO⁻NH₄⁺) at pH 3.3 using a chromatographic gradient. The mass spectrometer is equipped with an electrospray ionisation (ESI) source operating in positive ion mode. The monitored amines are exactly those previously cited.

The following examples further illustrate the invention.

### Example 1

### Preparation of the meat sample

5 g of matrix (meat), suitably sampled, are extracted with 15 ml of 5% trichloroacetic acid (TCA) through homogenisation in Ultraturrax for 3 minutes; the heterogeneous mixture is then centrifuged for 10 min at 5000 rpm and the supernatant is set aside.

A second extraction is carried out with 10 ml of 5% TCA, centrifuged and the supernatants are recombined.

At this point, 1 ml of acid solution is taken, is placed in a test tube shielded from light and the derivatization reaction is carried out by adding 300 µl of NaHCO₃, 200 µl of 2M NaOH and 2 ml of Dansyl chloride (concentration 10 mg/ml in acetone). The mixture is placed under magnetic stirring for 45 minutes at 40°C. At the end of the derivatization, 100 µl of 28% NH₄OH are added to neutralise the excess dansyl, and then the residual acetone is evaporated under a weak flow of nitrogen.

At this point, the residue is subjected to purification on reverse phase cartridges SPE C₁₈, which, positioned on the vacuum station, are activated with 5 ml of acetonitrile and then conditioned with 5 ml of water.

The derivatized extract is then loaded on the cartridge, previously activated (4 ml of acetonitrile) and conditioned (4 ml of water), the eluate is discarded and the cartridge is washed with 5 ml of water. Then, after having dried the cartridge perfectly, it is eluted with 4 ml of acetonitrile. The purified extract obtained is now filtered on 0.45 µm filters and injected in HPLC. The HPLC analysis is carried out using a Gemini column C18 (250 x 3 mm I.D., 5µm), a mobile phase consisting of methanol/acetonitrile (7/3) and water using a chromatographic gradient. The amines monitored are: tryptamine, phenylethylamine, putrescine, cadaverine, tyramine, histamine, spermine, spermidine. The monitoring wavelength λ is 254 nm.

### Example 2

5 g of matrix (fish), suitably sampled, are extracted with 15 ml of 5% trichloroacetic acid (TCA) through homogenisation in Ultraturrax for 3 minutes; the heterogeneous mixture is then centrifuged for 10 min at 5000 rpm and the supernatant is set aside.

A second extraction is carried out with 10 ml of 5% TCA, centrifuged and the supernatants are recombined. An aliquot of the supernatant (2 ml) is basified to pH 11 (with 28% NH₄OH) and loaded on a SPE STRATA X cartridge, previously activated (4 ml methanol) and conditioned (4 ml of water basified to pH 11). The eluate is then discarded and the cartridge is washed with 2 ml of a water/methanol mixture (95/5). Then, after having dried the cartridge perfectly, it is eluted with 4 of a methanol/acetic acid mixture (99/1). The purified extract obtained is evaporated under a nitrogen flow, mixed with 0.1N HCl (2 ml), filtered on 0.45 µm filters and injected in HPLC-MS/MS. The HPLC analysis is carried out using an reverse phase column Synergy Hydro (250x4.0 mm I.D., 5µm), a mobile phase consisting of methanol and ammonium formate buffer (HCOOH/HCOO⁻NH₄⁺) at pH 3.3 using a chromatographic gradient. The mass spectrometer is equipped with an electrospray ionisation (ESI) source operating in positive ion mode. For each amine the respective mass/mass transitions (precursor ions/ions produced) are monitored. The monitored amines are: tryptamine, phenylethylamine, putrescine, cadaverine, tyramine, histamine, spermine, spermidine.

### Procedure for obtaining essential oils or natural extracts

The essential oil of *Rosmarinus Officinalis* or the natural extract of *Citrus Limon* or the hydroalcoholic extract of marc, preferably grapeseed, were obtained through hydrodistillation process using a Clevenger apparatus from the leaves (in the case of rosemary) or from the rind (in the case of lemon). In the case of rosemary, the leaves, containing the bioactive ingredients, were initially prepared for the hydrodistillation process by eliminating the woody parts. In the case of lemon, the rind was separated from the pulp and cut into small pieces. At this point, 600 g of matrix (rosemary leaves or lemon rind) were hydro-distilled at 100°C for 5 hours using 3.5 I of water, obtaining a variable amount of essential oil or natural extract depending on the matrix used. The essential oil due to its lipophilic nature separates from water and is easily collected. In the case of *Vitis Vinifera* marc were used, with specific reference to grapeseed; the extraction was carried out on an amount of matrix equal to 100 g through magnetic stirring at controlled temperature (20°C, but it is also possible to use other temperatures like 30 or 40 or 45°C) using 400 ml of an hydroalcoholic solution (water/ethanol in 30/70 ratio but it is also possible to use other ratios like 10/90 or 20/80) for a time of 8 hours (up to a maximum of 72 hours). The obtained extract was then filtered, the solution was evaporated and lyophilised to definitively remove the water.

### Effectiveness on biogenic amines

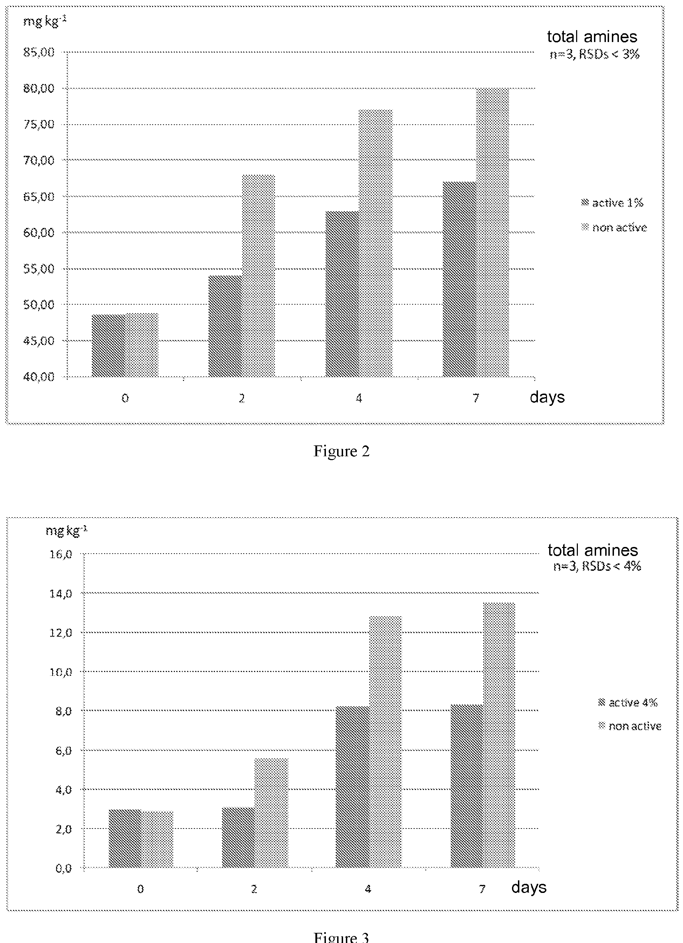

The study to evaluate the effectiveness of the new packaging enriched with essential oils was carried out in this way: the samples of fresh meat or fish were packed both in the packaging according to the present invention (hereafter also called "active") and in control packaging (not enriched with oils and hereafter also called "non active") then preserved in a refrigerator at 4°C. The study was carried out over 7 days, carrying out samplings on days 0, 2, 4, 7. The results relating to the total amount of biogenic amines in red veal meat preserved in the two packaging "active" 1% and "non active" are given in Figure 2.

From Figure 2 it can be clearly seen how the meat preserved in the "active" packaging 1% produces over time, thanks to the presence of the essential oils, a smaller amount of biogenic amines with respect to that contained in the classic "non active" packaging. In particular, it should be emphasised how on day 2 there is a difference of 8 mg kg⁻¹ in favour of the "active" (12% inhibition percentage), a difference which is also maintained on days 4 and 7 but with lower values (5 and 6 mg kg⁻¹, 7 and 8% percentages). The total amount of biogenic amines is in any case still lower in the "active" packaging with respect to the "non active" one. Other than the total amount, other indices relative to biogenic amines, like B.A.I (biogenic amine index) and the spermidine/spermine ratio (SPD/SPM) were also evaluated (C.M.G. Silva, M.B.A. Gloria, Bioactive amines in chicken breast and thigh after slaughter and during storage at 4±1°C and in chicken-based meat products, Food Chemistry, 78 (2002) 241-248) which confirmed the action of the active packaging compared to non active ones. Interesting results were obtained in the case of single amines, in particular for tyramine and spermine. The inhibiting action against the development of biogenic amines by the "active" packaging is maximum in the first two days; this result is very relevant particularly if we consider the normal times of consumption of this fresh product. Similar results were also obtained by testing the packaging enriched with essential oils on white chicken meat.

The inhibiting action of the active packaging against biogenic amines was also evaluated on fish. In Figure 3 we give the data relating to the total amount of biogenic amines in samples of fish (cod) preserved in the two packaging, "active" 4% and "non active".

Also in this case it can be clearly seen how the fish preserved in the "active" packaging 4% develops over time a lower amount of biogenic amines with respect to the fish contained in the "non active" packaging. Indeed, in all days of sampling the total amount of amines reaches significantly lower values for the "active" packaging with respect to the "non active" one. After two days, the development of biogenic amines in the "non active" packaging almost doubled with respect to the "active" 4% one (45% inhibition percentage) and also on days 4 and 7 substantial differences were recorded between the two packaging, again in favour of the"active" one (36 and 39% inhibition percentages). Moreover, interesting results were obtained in the case of single amines, in particular for histamine and cadaverine. Therefore, also in the case of fish, the essential oil of rosemary carries out a suppressing action on the development of biogenic amines, allowing a better preservation of food and consequently protecting its freshness.

The active packaging according to the present invention was subjected to tests to evaluate the possible alteration on them by the extracts, oils or molecules fixed. The tests consist in laying the active packaging in a stove at 60°C for one week. No alterations of any kind were detected, in particular of the film in contact with the active ingredient.

To conclude, both in the case of meat and in the case of fish analogous results were obtained by testing the active packaging formulated with percentages of essential oil and/or natural extract at different concentrations comprised in the range 0.1-4%. Moreover, mixtures of essential oil of rosemary/lemon extract were also tested in different percentage ratios from one another.

## Claims

1. Material for packaging food (10) comprising a first layer (11) made of paper, which is coupled to a second layer (12) made of polyethylene or from biodegradable and compostable plastic material, an optional third metallic layer (13) deposited on said second layer (12), said second layer (12) is coupled to said first layer (11) by interposition of an adhesive layer (14), or by interposition between said third metallic layer (13) and said first layer of paper (11), **characterised in that** on said second layer (12) on the surface (24) facing towards or in contact with the food a natural extract or an essential oil or at least one active molecule isolated from said natural extract or said essential oil from *Rosmarinus officinalis* or *Citrus limon* or *Vitis vinifera* or mixtures thereof is present.

2. Material according to claim 1, wherein said natural extract or essential oil or at least one active molecule isolated from said essential oil or mixtures thereof is present in a concentration comprised between 0.1 and 4% w/w.

3. Material according to any one of claims 1-2, in the form of a sheet.

4. Material for packaging food in the form of a closable bag suitable for containing the sheet of claim 3.

5. Bag according to claim 4, wherein said bag is closable in a sealed manner.

6. Bag according to claim 5, wherein said sealed closure takes place by thermo-welding.

7. Bag according to claim 5 or 6, wherein said bag is made by the same material of one of claims 1-3, with the proviso that said second layer (12) does not support said natural extract or an essential oil or at least one active molecule isolated from said essential oil coming from *Rosmarinus officinalis* or *Citrus limon* or *Vitis vinifera* or mixtures thereof.

8. Material according to one of claims 1-2, in the form of a vacuum pack.

9. Material according to one of claims 1-2, in the form of a pack in modified atmosphere.

10. Process for producing the material of claims 1-3, wherein onto the surface facing towards or in contact with the food a natural extract or an essential oil or at least one active molecule isolated from said natural extract or said essential oil coming from *Rosmarinus officinalis* or *Citrus limon* or *Vitis vinifera* or mixtures thereof is applied.

11. Process according to claim 10, wherein said natural extract or essential oil or said at least one active molecule is diluted with ethyl alcohol and subsequently distributed on the surface facing towards or in contact with the food.

12. Process according to claim 11, wherein said ethyl alcohol is removed.

13. Use of the packaging material of any one of claims 1-9 for packing a fresh food of animal origin.

14. Use according to claim 13, wherein said food is selected from the group consisting of meat and fish.

15. Method for inhibiting the development of biogenic amine in a fresh food comprising packaging of said food in a material of any one of claims 1-9.

16. Method according to claim 15, wherein said food is selected from the group consisting of meat and fish.

## Patentansprüche

1. Material zum Verpacken von Lebensmitteln (10), das eine erste Schicht (11) aus Papier aufweist, die mit einer zweiten Schicht (12) aus Polyethylen oder aus biologisch abbaubarem und kompostierbarem Kunststoffmaterial verbunden ist, eine optionale dritte Metallschicht (13) aufweist, die auf der zweiten Schicht (12) aufgebracht ist, wobei die zweite Schicht (12) durch Zwischenschaltung einer Adhäsionsschicht (14) mit der ersten Schicht (11) oder durch Zwischenschaltung zwischen der dritten Metallschicht (13) und der ersten Papierschicht (11) verbunden ist, **dadurch gekennzeichnet, dass** auf der zweiten Schicht (12) auf der Oberfläche (24), die dem Lebensmittel zugewandt oder damit in Kontakt ist, ein natürlicher Extrakt oder ein ätherisches Öl oder zumindest ein aktives Molekül, das vom natürlichen Extrakt oder ätherischen Öl aus Rosmarinus officinalis oder Citrus limon oder Vitis vinifera oder Gemischen davon isoliert ist, vorhanden sind.

2. Material nach Anspruch 1, wobei der natürliche Extrakt oder das ätherische Öl oder zumindest ein vom ätherischen Öl oder Gemischen davon isoliertes aktives Molekül in einer Konzentration zwischen 0,1 und 4 Gew.-% vorhanden ist.

3. Material gemäß einem der Ansprüche 1 bis 2 in Form eines Blattes.

4. Material zum Verpacken von Lebensmitteln in Form eines verschließbaren Beutels, der zur Aufnahme des Blattes nach Anspruch 3 geeignet ist.

5. Beutel nach Anspruch 4, wobei der Beutel dichtend verschließbar ist.

6. Beutel nach Anspruch 5, wobei der dichtende Verschluss durch Thermoschweißen erfolgt.

7. Beutel nach Anspruch 5 oder 6, wobei der Beutel aus demselben Material nach einem aus den Ansprüchen 1 bis 3 mit der Maßgabe hergestellt ist, dass die zweite Schicht (12) den natürlichen Extrakt oder ein ätherisches Öl oder zumindest ein aktives Molekül, das vom ätherischen Öl aus Rosmarinus officinalis oder Citrus limon oder Vitis vinifera oder Gemischen davon isoliert ist, nicht unterstützt.

8. Material nach einem der Ansprüche 1 bis 2 in Form einer Vakuumverpackung.

9. Material nach einem der Ansprüche 1 bis 2 in Form einer Verpackung in modifizierter Atmosphäre.

10. Verfahren zur Herstellung des Materials nach den Ansprüchen 1 bis 3, wobei auf der Oberfläche, die dem Lebensmittel zugewandt oder damit in Kontakt ist, ein natürlicher Extrakt oder ein ätherisches Öl oder zumindest ein aktives Molekül, das vom natürlichen Extrakt oder ätherischen Öl aus Rosmarinus officinalis oder Citrus limon oder Vitis vinifera oder Gemischen davon isoliert ist, aufgebracht wird.

11. Verfahren nach Anspruch 10, wobei der natürliche Extrakt oder das ätherische Öl oder das zumindest eine aktive Molekül mit Ethylalkohol verdünnt wird und anschließend auf der Oberfläche, die dem Lebensmittel zugewandt oder damit in Kontakt ist, verteilt wird.

12. Verfahren nach Anspruch 11, wobei der Ethylalkohol entfernt wird.

13. Verwendung des Verpackungsmaterials nach einem der Ansprüche 1 bis 9 zum Verpacken eines frischen Lebensmittels tierischen Ursprungs.

14. Verwendung nach Anspruch 13, wobei das Lebensmittel aus der Gruppe, die aus Fleisch und Fisch besteht, ausgewählt wird.

15. Verfahren zum Verhindern der Entwicklung von biogenem Amin in einem frischen Lebensmittel, das ein Verpacken des Lebensmittels in einem Material nach einem der Ansprüche 1 bis 9 aufweist.

16. Verfahren nach Anspruch 15, wobei das Lebensmittel aus der Gruppe, die aus Fleisch und Fisch besteht, ausgewählt wird.

## Revendications

1. Matière pour l'emballage d'aliments (10) comprenant une première couche (11) faite de papier, qui est couplée à une deuxième couche (12) faite de polyéthylène ou de matière plastique biodégradable et compostable, une troisième couche métallique facultative (13) déposée sur ladite deuxième couche (12), ladite deuxième couche (12) est couplée à ladite première couche (11) par interposition d'une couche adhésive (14), ou par interposition entre ladite troisième couche métallique (13) et ladite première couche de papier (11), **caractérisée en ce que** sur ladite deuxième couche (12) sur la surface (24) étant orientée vers ou en contact avec l'aliment un extrait naturel ou une huile essentielle ou au moins une molécule active isolée dudit extrait naturel ou de ladite huile essentielle de *Rosmarinus officinalis* ou de *Citrus limon* ou de *Vitis vinifera* ou de mélanges de ceux-ci est présent.

2. Matière selon la revendication 1, dans laquelle ledit extrait naturel ou ladite huile essentielle ou au moins une molécule active isolée de ladite huile essentielle ou de mélanges de ceux-ci est présent en une concentration comprise entre 0,1 et 4 % p/p.

3. Matière selon l'une quelconque des revendications 1 et 2, sous la forme d'une feuille.

4. Matière pour l'emballage d'aliments sous la forme d'un sac refermable adapté pour contenir la feuille selon la revendication 3.

5. Sac selon la revendication 4, dans lequel ledit sac est refermable d'une manière étanche.

6. Sac selon la revendication 5, dans lequel ladite fermeture étanche a lieu par thermosoudage.

7. Sac selon la revendication 5 ou 6, dans lequel ledit sac est fait de la même matière que celle des revendications 1 à 3, à condition que ladite deuxième couche (12) ne supporte pas ledit extrait naturel ou une huile essentielle ou au moins une molécule active isolée de ladite huile essentielle issue de *Rosmarinus officinalis* ou *Citrus limon* ou *Vitis vinifera* ou de mélanges de ceux-ci.

8. Matière selon l'une des revendications 1 et 2, sous la forme d'un emballage sous vide.

9. Matière selon l'une des revendications 1 et 2, sous la forme d'un emballage dans une atmosphère modifiée.

10. Procédé de production de la matière selon les revendications 1 à 3, dans lequel sur la surface étant orientée vers ou en contact avec l'aliment un extrait naturel ou une huile essentielle ou au moins une molécule active isolée dudit extrait naturel ou de ladite huile essentielle issue de *Rosmarinus officinalis* ou *Citrus limon* ou *Vitis vinifera* ou de mélanges de ceux-ci est appliqué.

11. Procédé selon la revendication 10, dans lequel ledit extrait naturel ou ladite huile essentielle ou ladite au moins une molécule active est dilué avec de l'alcool éthylique et ensuite réparti sur la surface étant orientée vers ou en contact avec l'aliment.

12. Procédé selon la revendication 11, dans lequel ledit alcool éthylique est éliminé.

13. Utilisation de la matière d'emballage selon l'une quelconque des revendications 1 à 9 pour l'emballage d'un aliment frais d'origine animale.

14. Utilisation selon la revendication 13, dans laquelle ledit aliment est choisi dans le groupe constitué de la viande et du poisson.

15. Procédé d'inhibition du développement d'amines biogènes dans un aliment frais comprenant l'emballage dudit aliment dans une matière selon l'une quelconque des revendications 1 à 9.

16. Procédé selon la revendication 15, dans lequel ledit aliment est choisi dans le groupe constitué de la viande et du poisson.
